# EUROPÄISCHE PATENTSCHRIFT

(11) **EP 2 945 843 B1**
(45) Veröffentlichungstag und Bekanntmachung des Hinweises auf die Patenterteilung: **22.03.2017**
(21) Anmeldenummer: 13802557.2
(22) Anmeldetag: 26.11.2013
(51) Int. Cl.: B62M 6/45

(54) **VERFAHREN UND VORRICHTUNG ZUR DETEKTION EINER WARTUNGSSITUATION BEI EINEM ZWEIRAD**
METHOD AND DEVICE FOR DETECTING A MAINTENANCE SITUATION IN A TWO-WHEELED VEHICLE
PROCÉDÉ ET DISPOSITIF DE DÉTECTION D'UNE SITUATION D'ENTRETIEN SUR UN DEUX-ROUES

(30) Priorität: 15.01.2013 DE 102013200485
(43) Veröffentlichungstag der Anmeldung: 25.11.2015
(73) Patentinhaber: Robert Bosch GmbH, 70442 Stuttgart (DE)
(72) Erfinder: KLEINBACH, Jakob, 70469 Stuttgart (DE); BAUMGAERTNER, Daniel, 72070 Tuebingen (DE)
(86) Internationale Anmeldenummer: PCT/EP2013/074690
(87) Internationale Veröffentlichungsnummer: WO 2014/111186

(56) Entgegenhaltungen:
- EP-A1- 0 697 330
- EP-A2- 2 028 098
- WO-A2-03/022671
- CN-A- 101 722 858
- DE-A1-102010 005 040
- DE-A1-102010 028 648
- JP-A- 2010 221 769
- US-A1- 2012 146 429
- US-B1- 6 260 649
- US-B1- 6 739 421

## Beschreibung

Die Erfindung betrifft ein Verfahren, beansprucht im Anspruch 1 und eine Vorrichtung, beansprucht im Anspruch 8, zur Unterstützung einer Wartung bei einem motorangetriebenen Zweirad.

### Stand der Technik

Formt ein solches motorangetriebenes Zweirad. Bei der Wartung eines solchen Zweirads ist es teilweise notwendig, das Fahrrad auf den Kopf zu stellen, um besser an die zu reparierenden Teile heran zu kommen. So ist es bei der Reparatur eines platten Reifens üblich, zunächst das Fahrrad umzudrehen, um es auf den Sattel und den Lenker zu stellen, bevor das Vorder- oder Hinterrad ausgebaut wird. Dies erleichtert den Ausbau des Rads zum Austausch des Reifens.

In einer derartigen Situation kann es jedoch vorkommen, dass der Motor eines angetriebenen Zweirads unbeabsichtigt aktiviert wird, so dass eine Drehung der Tretkurbel bzw. über die Kette eine Drehung des Hinterrads erfolgt. Ist der Fahrer in dieser Situation am Hinterrad beschäftigt, kann es zu ungewollten Verletzungen kommen.

Aus der nicht vorveröffentlichten Schrift DE 10 2012 201 881 A1 ist eine Steuerungsanordnung für ein Elektrofahrrad bekannt, bei dem in Abhängigkeit von Signalen eines Beschleunigungssensors ein Elektromotor zum Antrieb des Elektrofahrrads freigegeben wird. So wird der Antrieb freigegeben, wenn die Signale des Beschleunigungssensors die Vermutung nahelegen, dass sich das Elektrofahrrad bewegt. Zusätzlich kann ermittelt werden, ob ein Druck auf die Pedale ausgeübt wird.

### Offenbarung der Erfindung

Mit der vorliegenden Erfindung wird ein Verfahren zur Erkennung einer Wartungssituation an einem Zweirad beschrieben, sowie eine Vorrichtung zur Durchführung eines derartigen Verfahrens. Der Kern der Erfindung besteht darin, dass der Motor, der sich an dem Zweirad befindet und wenigstens zeitweise unterstützend für die Fortbewegung des Zweirads vorgesehen ist, in Abhängigkeit der erkannten Wartungssituation angesteuert wird. Eine derartige Wartungssituation wird dabei erkannt, indem die Lage des Zweirads, d.h. die Ausrichtung des Zweirads in Bezug auf den Untergrund bzw. die Fahrbahn, mittels einer ersten Sensorgröße erfasst wird. Die Ansteuerung des Motors erfolgt dann entweder als Reduzierung der aufgebrachten Antriebsleistung, z.B. in Form der Drehzahl bzw. des Drehmoments oder auch als eine komplette Abschaltung bzw. Blockierung des Motors.

Gerade bei Zweirädern wie Fahrrädern, Pedelecs, Ebikes oder E-Scootern besteht bei einer Panne oft die Notwendigkeit, das Zweirad auf den Kopf zu stellen, um zur Reparatur der Reifen an die Räder heranzukommen. Der Vorteil des erfindungsgemäßen Verfahrens bzw. einer entsprechenden Vorrichtung besteht darin, dass ein Fahrer bei einer derartigen Wartungssituation keine Gefahr fürchten muss, von den sich automatisch drehenden Tretkurbeln getroffen bzw. verletzt zu werden.

In einer Ausgestaltung der Erfindung ist vorgesehen, dass die Lage mittels der Veränderung einer Beschleunigungsgröße bzw. einer Neigungsgröße des Zweirads erfasst wird.

Besonders vorteilhaft ist es, wenn die Wartungssituation erkannt wird, indem die erfasste Lagegröße zur Charakterisierung der Lage des Zweirads einen ersten Schwellenwert überschreitet.

Weiterhin kann vorgesehen sein, dass eine zweite Sensorgröße erfasst wird, die zusammen mit der ersten Sensorgröße eine Wartungssituation kennzeichnet. So ist denkbar, dass zu der ersten Sensorgröße, die die Lage des Zweirads charakterisiert eine fahrdynamische Größe herangezogen wird, um festzustellen, ob es sich tatsächlich um eine Wartungssituation handeln kann. So ist denkbar, dass eine Verkippung des Zweirads während der Fahrt gerade keine Wartungssituation sondern eine mehr oder weniger gewollte Schräglage des Zweirads entspricht. Besonders vorteilhaft ist dabei, wenn die zweite Sensorgröße eine fahrzeugdynamische Größe darstellt, z.B. eine Geschwindigkeitsgröße oder eine Beschleunigungsgröße. Auch hier kann die Berücksichtigung der zweiten Größe bzw. die Erkennung der Wartungssituation davon abhängig sein, dass ein der zweiten Größe zugeordneter zweiter Schwellenwert überschritten wird. Alternativ kann die zweite Sensorgröße auch eine Ortsgröße, z.B. eine GPS-Koordinate darstellen. So kann vorgesehen sein, dass auf öffentlichen Straßen keine Wartungssituation eintreten kann.

Weiterhin kann vorgesehen sein, dass der Fahrer des Zweirads über die bevorstehende oder erfolgte Abschaltung bzw. Reduzierung der Motorleistung informiert wird. Dies kann sowohl visuell, akustisch oder haptisch erfolgen.

Selbstverständlich kann vorgesehen sein, dass der Motor nach der Wartung ohne eine manuelle Rücksetzung wieder zur Unterstützung des Antriebs zur Verfügung steht. Dies kann dadurch geschehen, dass die Lagegröße unter den ersten Schwellenwert fällt und so der Motor automatisch wieder in seinen Normalzustand der Unterstützung geschalten wird.

Weitere Vorteile ergeben sich aus der nachfolgenden Beschreibung von Ausführungsbeispielen bzw. aus den abhängigen Patentansprüchen.

### Kurze Beschreibung der Zeichnungen

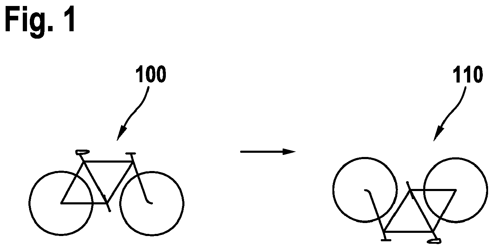

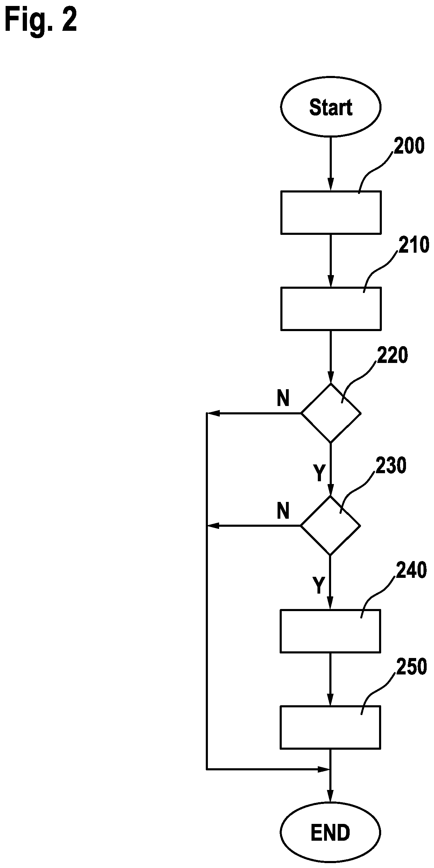

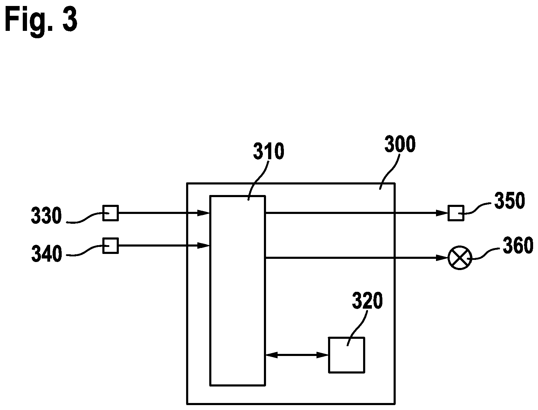

Figur 1 zeigt eine schematische Ansicht eines Zweirads im Normalzustand und im Wartungszustand. Mit dem Flussdiagramm der Figur 2 wird ein Ablaufschema des erfindungsgemäßen Verfahrens beschrieben. In der Figur 3 wird eine mögliche erfindungsgemäße Vorrichtung.

### Ausführungsformen der Erfindung

Kommt es bei einem Zweirad, z.B. einem Fahrrad 100 zu einer Reifenpanne, dreht der Fahrer das Zweirad üblicherweise auf den Kopf, indem er es auf den Sattel und den Lenker stellt, um besser an den Reifen heran zu kommen. Für den Falle eines motorangetriebenen Zweirads, z.B. eines elektrisch angetriebenen Fahrrads, wie einem Ebike oder einem Pedelec, kann es dabei vorkommen, dass das am Lenker befestigte Steuergerät unbeabsichtigt eingeschalten wird. Wird in dieser Wartungssituation 110 die Tretkurbel und die Kette bewegt, kann es beim Ausbau des Rads bzw. beim Austausch des Reifens leicht zu einer Verletzung des Fahrers kommen, beispielsweise indem Finger oder Werkzeug in die Speichen geraten. Um eine derartige Gefährdungssituation während der Wartung zu verhindern, wird gemäß der vorliegenden Erfindung ein Verfahren bzw. eine Vorrichtung beschrieben, die automatisch eine entsprechende Wartungssituation erkennt und den Motor abbremst bzw. gänzlich blockiert. Der Kern des entsprechenden Verfahrens liegt dabei darin, dass die Wartungssituation in Abhängigkeit wenigstens einer Sensorgröße erkannt wird, die den Zustand bzw. die Lage des Zweirads charakterisiert.

Ein mögliches Verfahren, mit dem die Wartungssituation 110 erkannt werden kann, ist anhand des Algorithmus' in Figur 2 dargestellt. Nach dem Start der Algorithmus, welches beispielsweise auch in Form eines Programm in einer Steuereinheit 300 abgearbeitet werden kann, wird in einem ersten Schritt ein erstes Sensorsignal S₁ erfasst. Dieses erste Sensorsignal S₁ repräsentiert die Lage bzw. Ausrichtung des Zweirads vorzugsweise während des normalen Fahrbetriebs. So kann das erste Sensorsignal S₁ eine Neigung des Zweirads gegenüber der Fahrbahn oder eine Geschwindigkeits- oder Beschleunigungsgröße um die Längs- oder Querachse des Zweirads darstellen. In einem optionalen zweiten Schritt 210 kann eine zweite Sensorgröße S₂ erfasst werden, die bevorzugt eine fahrdynamische Größe darstellt, um die Wartungssituation 110 redundant zu erfassen. Hierbei kann es sich beispielsweise um eine Geschwindigkeits- oder Beschleunigungsgröße in Längsrichtung handeln oder auch um ein Drehmoment, welches durch den Fahrer aufgebracht wird. Alternativ kann auch eine Ortsgröße, z.B. eine GPS-Ortskoordinate erfasst werden.

Im Anschluss sind ein bzw. optional zwei Schritte vorgesehen, die anhand der erfassten Größen feststellen, ob eine Wartungssituation 110 vorliegt. Im Schritt 220 wird überprüft, ob die erste Größe S₁ einen ersten Schwellenwert SW₁ überschreitet. Wird als erste Größe S₁ eine Neigung des Zweirads gegenüber dem Untergrund bzw. der Fahrbahn erfasst, so kann aus der Verkippung in Bezug auf die Längs- oder Querachse geschlossen werden, dass sich das Zweirad mit seinen Rädern nicht mehr auf der Fahrbahn befindet, weshalb auf eine Reduzierung der Motorleistung oder sogar auf eine Abschaltung bzw. Unterbrechung des Motorantriebs geschlossen werden kann, z.B. in Folge einer Wartung oder eines Unfalls. Typische Werte für eine derartige Verkippung können dabei Winkel größer 60°, 90°, 110° oder 135° sein. Um ganz sicher zu gehen, dass auch tatsächlich eine Wartungssituation der eingangs beschriebenen Art vorliegt, können für den ersten Schwellenwert auch Werte im Bereich von 160° bis 180° verwendet werden. Alternativ kann auch aus den am Fahrrad vorhandenen Sensoren für Geschwindigkeit und Beschleunigung oder einem optionalen Drehratensensor eine erste Größe S₁ abgeleitet werden, die auf eine Verkippung des Zweirads hinweist. Entsprechend sind dann die Schwellenwerte zu wählen, um die Wartungssituation zu erkennen. Wird eine Wartungssituation nicht erkannt, kann das Verfahren beendet werden.

Im optionalen nächsten Schritt 230 kann die erfasste Sensorgröße S₂ berücksichtigt werden, um eine Wartungssituation oder einen Sturz zu erfassen. Dabei dient diese Sensorgröße S₂ als Redundanzgröße mit der die Wartungssituation oder der Sturz genauer erkannt werden kann. So kann neben einer Neigung mit der ersten Sensorgröße S₁ auch überprüft werden, inwieweit sich das Zweirad in einem "normalen" Fahrtbetrieb befindet. Wird als zweite Sensorgröße S₂ beispielsweise die Längsgeschwindigkeit, die Längsbeschleunigung oder die Tretkraft bzw. das Drehmoment oder die Drehzahl der Kurbel, welches durch den Fahrer erzeugt wird, erfasst, kann zwischen einer Kurvenfahrt und einer Wartungssituation unterschieden werden. Durch die Berücksichtigung des zeitlichen Verlaufs der zweiten Sensorgröße S₂ kann zudem auf einen Unfall geschlossen werden, wenn beispielsweise die Neigung plötzlich während einer Längsbeschleunigung zunimmt. Auch in diesem Fall ist die Abschaltung des Motors vorgesehen, um unnötige Verletzungen des Fahrers zu verhindern.

Falls somit eine Wartungssituation oder ein Sturz in Schritt 220 oder 230 erkannt wird, kann optional in Schritt 240 vorgesehen sein, dass der Fahrer über die erkannten Situation bzw. die bevorstehende Drosselung oder Abschaltung des Motors informiert wird, ggf. um ihm die Möglichkeit zu geben, Gegenmaßnahmen zu ergreifen. Diese Information kann sowohl visuell auf dem Display der Steuereinheit für den Motor, akustisch durch einen Warnton oder haptisch durch ein Rütteln an dem Lenker angezeigt werden. Im letzten Schritt 250 wird der Motor zumindest derart angesteuert, dass die Drehzahl bzw. das Drehmoment reduziert wird. Alternativ wird der Motor auch gänzlich blockiert bzw. abgeschaltet, um eine unnötige Gefährdung des Fahrers, der am dem Zweirad hantiert, zu vermeiden. Ggf. kann auch eine Schiebehilfe, die am Zweirad aktiv ist, deaktiviert werden.

Das Verfahren zur Erkennung der Wartungssituation 110 bzw. der beschriebene Algorithmus kann sowohl in regelmäßigen Abständen aber auch aufgrund einer bestimmten Situation gestartet werden. So ist beispielsweise denkbar, das Verfahren erst dann zu starten, wenn eine ohnehin erfasste Sensorgröße S1 einen Schwellenwert überschreitet. In diesem Fall würde der Algorithmus nach Figur 2 auf die Schritte 210 bis 250 beschränkt, wobei der Schritt 220 bereits in die Startbedingung aufgenommen worden ist. Alternativ kann das Verfahren gestartet werden, sobald der Motor nicht aktiv ist. So kann die Abfrage nach der Wartungssituation auf eine Situation beschränkt werden, in der das Zweirad anhält und der Fahrer den Antrieb nicht benötigt.

In der Figur 3 ist ein schematischer Aufbau einer Vorrichtung abgebildet, in dem das erfindungsgemäß Verfahren ablaufen kann. Die zentrale Steuereinheit 300 kann dabei innerhalb des Steuergeräts des Motors bzw. des elektrisch angetriebenen Zweirads untergebracht sein. Es ist jedoch auch denkbar, dass die Steuereinheit ein eigenständiges System darstellt, welches lediglich die Sensorgrößen des Steuergeräts nutzt. In der Steuereinheit 300 ist eine Verarbeitungseinheit 310 vorgesehen, welches die Sensorgröße S₁ und optional S₂ von den Sensoren 330 und 340 erfasst. In Abhängigkeit von in einem Speicher 320 abgelegten Schwellenwerten oder Vergleichswerten kann die Verarbeitungseinheit 310 gemäß dem vorstehend beschriebenen Verfahren erkennen, ob sich das Zweirad in einer Wartungssituation 110 befindet. In diesem Fall wird die Motorleistung entweder reduziert oder gänzlich auf Null zurück gefahren. Alternativ kann auch vorgesehen sein, dass die Ansteuerung des Motors blockiert bzw. unterbrochen wird, so dass weitere Drehungen unterbleiben. Weiterhin ist möglich, dass der Fahrer über eine entsprechende Anzeige 360 informiert wird, dass der Motor blockiert bzw. unterbrochen wird oder worden ist. Dies kann beispielsweise direkt im Display des Steuergeräts geschehen oder durch eine zusätzliche Anzeige. Darüber hinaus ist denkbar, dass ein Warnton abgegeben wird, entweder vor dem Unterbrechen des Motorantriebs oder während der Unterbrechung. Um eine Belästigung während der Wartung durch den Warnton zu verhindern kann vorgesehen sein, dass dieser Warnton nur kurz zu Beginn der Blockierung bzw. Unterbrechung des Motors ertönt.

## Patentansprüche

1. Verfahren zur Erkennung einer Wartungssituation (110) an einem mittels eines Motors angetriebenen Zweirads (100), insbesondere eines Fahrrads, wobei
• eine Lagegröße (S₁) erfasst wird, die die Ausrichtung des Zweirads (100) in Bezug auf den Untergrund bzw. die Fahrbahn repräsentiert, und
• die Leistung des Motors in Abhängigkeit von der Lagegröße (S₁) gesteuert wird,
wobei in Abhängigkeit von der Lagegröße (S₁) eine Wartungssituation (110) erkannt wird und die vom Motor abgegebene Leistung während der Wartungssituation (110) zumindest zeitweise reduziert wird.

2. Verfahren nach Anspruch 1, **dadurch gekennzeichnet, dass** der Motor bei Erkennung einer Wartungssituation (110) blockiert wird.

3. Verfahren nach Anspruch 1 oder 2, **dadurch gekennzeichnet, dass** als Lagegröße (S₁) eine Beschleunigungsgröße oder eine Neigungsgröße erfasst wird.

4. Verfahren nach einem der Ansprüche 1 bis 3, **dadurch gekennzeichnet, dass** eine Wartungssituation (110) erkannt wird, wenn die Lagegröße (S₁) einen ersten Schwellenwert (SW₁) übersteigt.

5. Verfahren nach einem der vorhergehenden Ansprüche, **dadurch gekennzeichnet, dass** die Wartungssituation (110) in Abhängigkeit einer Fahrzeuggröße (S₂) erkannt wird, wobei vorgesehen ist, dass die Fahrzeuggröße (S₂) eine die dynamische Bewegung des Zweirads (100) repräsentierende Größe darstellt, wobei insbesondere vorgesehen ist, dass die Fahrzeuggröße (S₂) eine Geschwindigkeitsgröße oder eine Beschleunigungsgröße repräsentiert.

6. Verfahren nach einem der vorhergehenden Ansprüche, **dadurch gekennzeichnet, dass** die Wartungssituation (110) bei einer Rollbewegung des Zweirads (100) um mehr als 90° erkannt wird, wobei insbesondere vorgesehen sein kann, dass die Rollbewegung in Abhängigkeit einer fahrdynamischen Größe erfasst werden kann.

7. Verfahren nach einem der vorhergehenden Ansprüche, **dadurch gekennzeichnet, dass** bei Erkennung der Wartungssituation (110) das vom Motor erzeugte Drehmoment oder die Drehzahl reduziert wird, insbesondere auf null.

8. Vorrichtung zur Durchführung eines Verfahrens nach einem der Ansprüche 1 bis 7, wobei die Vorrichtung (300) eine Wartungssituation (110) an einem mittels eines Motors angetriebenen Zweirads (100) erkennt, insbesondere eines Fahrrads,
wobei die Vorrichtung
• eine Lagegröße (S₁) erfasst, die die Ausrichtung des Zweirads (100) in Bezug auf den Untergrund bzw. die Fahrbahn repräsentiert, und
• ein Mittel (310) vorgesehen ist, welches die Leistung des Motors (350) in Abhängigkeit von der Lagegröße (S₁) steuert,
wobei das Mittel (310) in Abhängigkeit von der Lagegröße (S₁) eine Wartungssituation (110) erkennt und die vom Motor (350) abgegebene Leistung während der Wartungssituation (110) zumindest zeitweise reduziert.

9. Vorrichtung nach Anspruch 8, **dadurch gekennzeichnet, dass** zur Erkennung der Wartungssituation (110) die Vorrichtung
• eine Fahrzeuggröße (S₂) erfasst, wobei die Fahrzeuggröße (S₂) eine die dynamische Bewegung des Zweirads (100) repräsentierende Größe darstellt, und
• das Mittel (310) die Wartungssituation (110) in Abhängigkeit der Fahrzeuggröße (S₂) erkennt,
wobei insbesondere vorgesehen ist, dass die Fahrzeuggröße (S₂) eine Geschwindigkeitsgröße oder eine Beschleunigungsgröße repräsentiert.

10. Vorrichtung nach einem der Ansprüche 8 und 9, **dadurch gekennzeichnet, dass** das Mittel (310) die Wartungssituation (110) bei einer Rollbewegung des Zweirads (100) um mehr als 90° erkennt, wobei insbesondere vorgesehen sein kann, dass die Rollbewegung in Abhängigkeit einer fahrdynamischen Größe erfasst wird.

## Claims

1. Method for detecting a maintenance situation (110) in a two-wheeled vehicle (100) driven by means of an engine, in particular a motorcycle, wherein
• a position variable (S₁) which represents the orientation of the two-wheeled vehicle (100) with respect to the underlying surface or the carriageway is acquired, and
• the power of the engine is controlled as a function of the position variable (S₁),
wherein a maintenance situation (110) is detected as a function of the position variable (S₁) and the power which is output by the engine is reduced at least temporarily during the maintenance situation (110).

2. Method according to Claim 1, **characterized in that** the engine is blocked when a maintenance situation (110) is detected.

3. Method according to Claim 1 or 2, **characterized in that** an acceleration variable or an inclination variable is acquired as a position variable (S₁).

4. Method according to one of Claims 1 to 3, **characterized in that** a maintenance situation (110) is detected if the position variable (S₁) exceeds a first threshold value (SW₁).

5. Method according to one of the preceding claims, **characterized in that** the maintenance situation (110) is detected as a function of a vehicle variable (S₂), wherein there is provision that the vehicle variable (S₂) constitutes a variable which represents the dynamic movement of the two-wheeled vehicle (100), wherein there is provision, in particular, that the vehicle variable (S₂) represents a speed variable or an acceleration variable.

6. Method according to one of the preceding claims, **characterized in that** the maintenance situation (110) is detected when there is a rolling movement of the two-wheeled vehicle (100) by more than 90°, wherein, in particular, there can be provision that the rolling movement can be acquired as a function of a vehicle movement dynamics variable.

7. Method according to one of the preceding claims, **characterized in that** when the maintenance situation (110) is detected, the torque generated by the engine or the rotational speed is reduced, in particular to zero.

8. Device for carrying out a method according to one of Claims 1 to 7, wherein the device (300) detects a maintenance situation (110) in a two-wheeled vehicle (100) driven by means of an engine, in particular a motorcycle,
wherein the device
• acquires a position variable (S₁) which represents the orientation of the two-wheeled vehicle (100) with respect to the underlying surface or the carriageway, and
• a means (310) is provided which controls the power of the engine (350) as a function of the position variable (S₁),
wherein
the means (310) detects a maintenance situation (110) as a function of the position variable (S₁) and reduces the power which is output by the engine (350) at least temporarily during the maintenance situation (110).

9. Device according to Claim 8, **characterized in that** in order to detect the maintenance situation (110) the device
• acquires a vehicle variable (S₂), wherein the vehicle variable (S₂) constitutes a variable which represents the dynamic movement of the two-wheeled vehicle (100), and
• the means (310) detects the maintenance situation (110) as a function of the vehicle variable (S₂),
wherein there is provision, in particular, that the vehicle variable (S₂) represents a speed variable or an acceleration variable.

10. Device according to one of Claims 8 and 9, **characterized in that** the means (310) detects the maintenance situation (110) when there is a rolling movement of the two-wheeled vehicle (100) by more than 90°, wherein, in particular, there can be provision that the rolling movement is acquired as a function of a vehicle movement dynamics variable.

## Revendications

1. Procédé de détection d'une situation d'entretien (110) sur un deux-roues motorisé (100), en particulier une bicyclette,
- une grandeur de position (S₁) qui représente l'orientation du deux-roues (100) par rapport au sol ou à la chaussée étant détectée,
- la puissance du moteur étant commandée en fonction de la grandeur de position (S₁),
une situation d'entretien (110) étant détectée en fonction de la grandeur de position (S₁) et la puissance fournie par le moteur étant réduite au moins temporairement pendant la situation d'entretien (110).

2. Procédé selon la revendication 1, **caractérisé en ce que** le moteur est bloqué lors d'une détection d'une situation d'entretien (110).

3. Procédé selon la revendication 1 ou 2, **caractérisé en ce qu'**une grandeur d'accélération ou une grandeur d'inclinaison est détectée en tant que grandeur de position (S₁).

4. Procédé selon l'une quelconque des revendications 1 à 3, **caractérisé en ce qu'**une situation d'entretien (110) est détectée lorsque la grandeur de position (S₁) dépasse une première valeur seuil (SW₁).

5. Procédé selon l'une quelconque des revendications précédentes, **caractérisé en ce que** la situation d'entretien (110) est détectée en fonction d'une grandeur du véhicule (S₂), la grandeur du véhicule (S₂) étant une grandeur représentant un déplacement dynamique du deux-roues (100), notamment la grandeur du véhicule (S₂) représentant une grandeur de vitesse ou une grandeur d'accélération.

6. Procédé selon l'une quelconque des revendications précédentes, **caractérisé en ce que** la situation d'entretien (110) est détectée dans le cas d'un mouvement de roulement du deux-roues (100) de plus de 90°, le mouvement de roulement pouvant notamment être détecté en fonction d'une grandeur dynamique de conduite.

7. Procédé selon l'une quelconque des revendications précédentes, **caractérisé en ce qu'**à la détection de la situation d'entretien (110), le couple ou le régime généré par le moteur est réduit, en particulier à zéro.

8. Dispositif pour mettre en oeuvre un procédé selon l'une quelconque des revendications 1 à 7, dans lequel le dispositif (300) détecte une situation d'entretien (110) sur un deux-roues motorisé (100), en particulier une bicyclette,
- le dispositif détectant une grandeur de position (S₁) qui représente l'orientation du deux-roues (100) par rapport au sol ou à la chaussée, et
- un moyen (310) étant prévu, lequel commande la puissance du moteur (350) en fonction de la grandeur de position (S₁),
le moyen (310) détectant une situation d'entretien (110) en fonction de la grandeur de position (S₁) et réduisant au moins temporairement la puissance fournie par le moteur (350) pendant la situation d'entretien (110).

9. Dispositif selon la revendication 8, **caractérisé en ce que** pour détecter la situation d'entretien (110),
- le dispositif détecte une grandeur de véhicule (S2), la grandeur de véhicule (S₂) étant une grandeur représentant le déplacement dynamique du deux-roues (100), et
- le moyen (310) détecte la situation d'entretien (110) en fonction de la grandeur de véhicule (S₂),
la grandeur de véhicule (S₂) représentant notamment une grandeur de vitesse ou une grandeur d'accélération.

10. Dispositif selon l'une quelconque des revendications 8 et 9, **caractérisé en ce que** le moyen (310) détecte la situation d'entretien (110) dans le cas d'un mouvement de roulement du deux-roues (100) de plus de 90°, le mouvement de roulement étant notamment détecté en fonction d'une grandeur dynamique de conduite.
